(19) Europäisches Patentamt
European Patent Office
Office européen des brevets

(11) Veröffentlichungsnummer: **0 266 692 B1**

(12) **EUROPÄISCHE PATENTSCHRIFT**

(45) Veröffentlichungstag der Patentschrift: **08.05.91**

(51) Int. Cl.$^5$: **C09B 29/033**, D06P 1/18

(21) Anmeldenummer: **87115960.4**

(22) Anmeldetag: **30.10.87**

(54) **Thiophengruppenhaltige Azofarbstoffe.**

(30) Priorität: **04.11.86 DE 3637438**

(43) Veröffentlichungstag der Anmeldung:
**11.05.88 Patentblatt 88/19**

(45) Bekanntmachung des Hinweises auf die Patenterteilung:
**08.05.91 Patentblatt 91/19**

(84) Benannte Vertragsstaaten:
**CH DE FR GB IT LI**

(56) Entgegenhaltungen:
**GB-A- 2 163 768**

(73) Patentinhaber: **BASF Aktiengesellschaft**
**Carl-Bosch-Strasse 38**
**W-6700 Ludwigshafen(DE)**

(72) Erfinder: **Etzbach, Karl-Hein, Dr.**
**Carl-Bosch-Ring 55**
**W-6710 Frankenthal(DE)**
Erfinder: **Hansen, Guenther, Dr.**
**Alwin-Nittasch-Platz 8**
**W-6700 Ludwigshafen(DE)**
Erfinder: **Schefczik, Ernst, Dr.**
**Dubliner Strasse 7**
**W-6700 Ludwigshafen(DE)**
Erfinder: **Reichelt, Helmut, Dr.**
**Weinbachstrasse 20**
**W-6701 Niederkirchen(DE)**

EP 0 266 692 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft neue thiophengruppenhaltige Azofarbstoffe, deren Diazokomponente ein Thiophen darstellt, das in Ringposition 5 des Thiophenrings eine Oximethergruppe aufweist, sowie ihre Verwendung zum Färben von Fasermaterial.

Aus der DE-A-3 517 365 sind Azofarbstoffe bekannt, deren Diazokomponente sich von 2-Aminothiophenderivaten ableitet.

Weiterhin beschreibt die GB-A-2 163 768 Azofarbstoffe, deren Diazokomponente 2-Aminothiophene sein können, die in Ringposition 5 eine Formylgruppe aufweisen.

Aufgabe der vorliegenden Erfindung war es, neue Thiophenazofarbstoffe bereitzustellen, die vorteilhafte anwendungstechnische Eigenschaften besitzen.

Es wurden nun thiophengruppenhaltige Azofarbstoffe der Formel I

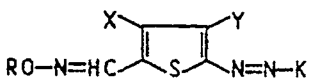

(I)

gefunden, in der

R jeweils gegebenenfalls substituiertes $C_1$-$C_{12}$-Alkyl, $C_3$-$c_6$-Alkenyl, $C_5$-$C_7$-Cycloalkyl oder Phenyl,

X Wasserstoff, Halogen, Hydroxy, gegebenenfalls durch Phenyl substituiertes $C_1$-$C_8$-Alkoxy, $C_5$-$C_7$-Cycloalkoxy, gegebenenfalls substituiertes Phenoxy, Mercapto, gegebenenfalls durch Hydroxy, $C_1$-$C_4$-Alkoxy-carbonyl oder Phenyl substituiertes $C_1$-$C_8$-Alkylthio, $C_5$-$C_7$-Cycloalkylthio, gegebenenfalls substituiertes Phenylthio, $C_1$-$C_4$-Alkyl-sulfonyl, gegebenenfalls substituiertes Phenylsulfonyl, $C_1$-$C_8$-Alkyl oder gegebenenfalls substituiertes Phenyl

Y Cyano, Nitro, $C_1$-$C_{10}$-Alkanoyl, gegebenenfalls substituiertes Benzoyl, $C_1$-$C_4$-Alkylsulfonyl, gegebenenfalls substituiertes Phenylsulfonyl oder den Rest CO-Z, in dem Z für Hydroxy, gegebenenfalls durch Hydroxy oder $C_1$-$C_4$-Alkoxy substituiertes $C_1$-$C_8$-Alkoxy, gegebenenfalls substituiertes Phenoxy, Amino, $C_1$-$C_8$-Mono- oder Dialkylamino, Pyrrolidino, Piperidino, Morpholino oder N-($C_1$-$C_4$-Alkyl)piperazino steht und

K den Rest einer Kupplungskomponente bedeuten.

Alle in den obigen Resten auftretenden Alkyl- und Alkenylgruppen Können sowohl geradkettig als auch verzweigt sein.

Für den Fall, daß in der obengenannten Formel I substituierte Phenylreste aufreten, kommen, sofern nicht anders vermekt, als Substituenten jeweils Halogen, insbesondere Fluor, Chlor oder Brom, $C_1$-$C_4$-Alkyl oder $C_1$-$C_4$-Alkoxy in Betracht.

Als Substituenten in den Resten R kommen Chlor, Brom, $C_1$-$C_4$-Alkoxy, gegebenenfalls substituiertes Phenyl oder Phenoxy in Betracht. Einzelne Reste R sind beispielsweise: $CH_3$, $C_2H_5$, $C_3H_7$, $C_4H_9$, $C_5H_{11}$, $C_6H_{13}$, $C_7H_{15}$, $C_8H_{17}$, $C_9H_{19}$, $C_{10}H_{21}$, $C_{11}H_{23}$, $C_{12}H_{25}$, $C_2H_4Cl$, $C_2H_4OCH_3$, $C_2H_4OC_6H_5$, $CH_2CH=CH_2$, $CH_2CH=CHCl$, $CH_2C_6H_5$, $CH_2C_6H_4CH_3$, $CH_2C_6H_4Cl$, $CH_2C_6H_4OCH_3$, $C_2H_4C_6H_5$, Cyclopentyl, Cyclohexyl, Cycloheptyl, $C_6H_5$ oder $C_6H_4CH_3$.

Reste X sind z.B.: Wasserstoff, Fluor, Chlor, Brom, OH, $OCH_3$, $OC_2H_5$. $OC_3H_7$, $OC_4H_9$, $OC_5H_{11}$, $OC_6H_{13}$, $OC_7H_{15}$, $OC_8H_{17}$, $OC_5H_9$, $OC_6H_{11}$, $OC_7H_{13}$, $OCH_2C_6H_5$, $OC_2H_4C_6H_5$, $OC_6H_5$, $OC_6H_4CH_3$, $OC_6H_4Cl$, SH, $SCH_3$, $SC_2H_5$, $SC_3H_7$, $SC_4H_9$, $SC_5H_{11}$, $SC_6H_{13}$, $SC_7H_{15}$, $SC_8H_{17}$, $SC_2H_4OH$, $SCH_2COOCH_3$, $SCH_2COOC_2H_5$, $SC_6H_{11}$, $SCH_2C_6H_5$, $SC_6H_5$, $SC_6H_4CH_3$, $CH_3SO_2$, $C_4H_9SO_2$, $C_6H_5SO_2$, Cl-$C_6H_4SO_2$, $C_4H_9$-$C_6H_4SO_2$, $CH_3$, $C_2H_5$, $C_3H_7$, $C_4H_9$, $C_5H_{11}$, $C_6H_{13}$, $C_7H_{15}$, $C_8H_{17}$, $C_6H_5$, $CH_3C_6H_4$ oder $CH_3OC_6H_4$.

Reste Y sind im einzelnen neben den bereits genannten z.B.:

$CH_3CO$, $C_2H_5CO$, $C_3H_7CO$, $C_4H_9CO$, $C_5H_{11}CO$, $C_6H_{13}CO$, $C_7H_{15}CO$, 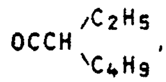,
$C_8H_{17}CO$, $C_9H_{19}CO$, $C_6H_5CO$, $CH_3C_6H_4CO$, $ClC_6H_4CO$, $(CH_3)_2C_6H_3CO$, $H_3COC_6H_4CO$,
$Cl_2C_6H_3CO$, $CH_3SO_2$, $C_2H_5SO_2$, $C_4H_9SO_2$, $C_6H_5SO_2$, $CH_3C_6H_4SO_2$, $ClC_6H_4SO_2$,
$COOH$, $COOCH_3$, $COOC_2H_5$, $COOC_3H_7$, $COOC_4H_9$, $COOC_5H_{11}$, $COOC_6H_{13}$, $COOC_7H_{15}$,
$COOC_8H_{17}$, 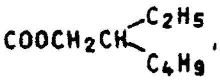, $COOC_2H_4OH$, $COOC_3H_6OH$, $COOC_2H_4OCH_3$, $COOC_2H_4OC_2H_5$,
$COOC_2H_4OC_4H_9$, $COOC_6H_5$, $COOC_6H_4CH_3$, $CONH_2$, $CONHCH_3$, $CONHC_2H_5$, $CONHC_3H_7$,
$CONHC_4H_9$, $CONHC_6H_{13}$, $CONHC_8H_{17}$, $CON(CH_3)_2$, $CON(C_2H_5)_2$, $CON(C_3H_7)_2$,
$CON(C_4H_9)_2$, 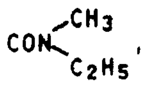, 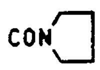, 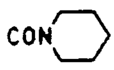, 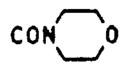 oder 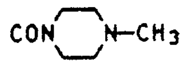.

In Formel I bedeutet K den Rest einer Kupplungskomponente. Solche Komponenten gehorchen der Formel KH und stammen aus der Anilin-, Naphthylamin-, Pyrazolon-, Aminopyrazol-, Indol-, Thiazol-, Thiophen-, Tetrahydrochinolin-oder Pyridinreihe.

Insebesondere entsprechen sie den allgemeinen Formeln II bis X:

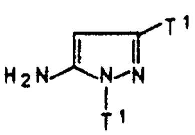,
(II)

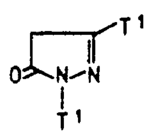,
(III)

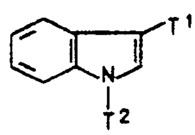,
(IV)

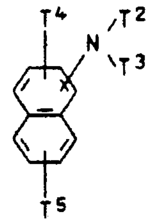,
(V)

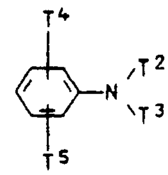,
(VI)

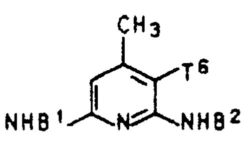,
(VII)

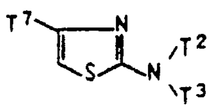,
(VIII)

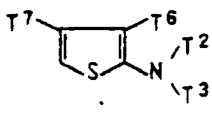
(IX)

oder

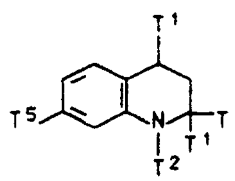
(X)

In diesen Formeln bedeuten:

- $B_1$ Wasserstoff oder den Rest $B_2$,
- $B_2$ jeweils gegebenenfalls substituiertes $C_1$-$C_8$-Alkyl, $C_5$-$C_7$-Cycloalkyl oder Phenyl, $C_3$-$C_6$-Alkenyl oder Acyl,
- $T^1$ Wasserstoff, gegebenenfalls durch Phenyl substituiertes $C_1$-$C_4$-Alkyl oder gegebenenfalls substituiertes Phenyl,
- $T^2$ Wasserstoff oder den Rest $T^3$,
- $T^3$ gegebenenfalls substituiertes $C_1$-$C_6$-Alkyl, $C_5$-$C_7$-Cycloalkyl, $C_3$-$C_6$-Alkenyl oder Phenyl,
- $T^4$ und $T^5$ unabhängig voneinander Wasserstoff, $C_1$-$C_4$-Alkyl, $C_1$-$C_4$-Alkoxy, Phenoxy, Benzyloxy, Halogen, $C_1$-$C_4$-Alkylsulfonylamino, $C_1$-$C_4$-Dialkylaminosulfonylamino, $C_1$-$C_4$-Alkoxycarbonylamino, gegebenenfalls substituiertes Benzoylamino oder $C_1$-$C_6$-Alkanoylamino,
- $T^6$ Cyano, Nitro, Acetyl, Carbamoyl, $C_1$-$C_4$-Mono- oder Dialkylcarbamoyl, $C_1$-$C_4$-Alkoxycarbonyl oder $C_1$-$C_4$-Alkoxyethoxycarbonyl und

$T^7$ gegebenenfalls durch Cyano, $C_1$-$C_4$-Alkoxycarbonyl oder Phenyl substituiertes $C_1$-$C_{10}$-Alkyl, Phenyl, Halogen, Nitro, gegebenenfalls durch $C_1$-$C_4$-Alkoxy substituiertes $C_1$-$C_{10}$-Alkoxy, Phenoxy, Benzyloxy, $C_1$-$C_4$-Alkylthio, Phenylthio, $C_1$-$C_4$-Monor- oder Dialkylamino, $C_1$-$C_5$-Alkanoylamino oder $C_1$-$C_4$-Alkoxycarbonyl.

Für den Fall, daß der Rest $B^2$ für substituiertes $C_1$-$C_6$-Alkyl steht, kommen Chlor, Brom, Hydroxy, $C_1$-$C_8$-Alkoxy, Phenoxy, gegebenenfalls substituiertes Phenyl, Cyano, Carboxyl, $C_1$-$C_8$-Alkanoyloxy, $C_1$-$C_8$-Alkanoyloxy-$C_1$-$C_4$-alkoxy, $C_1$-$C_8$-Alkoxy-$C_1$-$C_4$-alkoxy, Benzoyloxy, o-, m-oder p-Methylbenzoyloxy, o-, m-oder p-Chlorobenzoyloxy, $C_1$-$C_8$-Alkoxy-$C_1$-$C_8$-alkanoyloxy, Phenoxy-$C_1$-$C_8$-alkanoyloxy, $C_1$-$C_8$-Alkoxycarbonyloxy, $C_1$-$C_8$-Alkoxy-$C_1$-$C_8$-alkoxycarbonyloxy, Benzyloxycarbonyloxy, Phenethoxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_8$-Alkoxy-$C_1$-$C_8$-alkoxycarbonyl, Phenoxycarbonyl, Benzyloxycarbonyl, Phenoxy-$C_1$-$C_4$-alkoxy oder Phenylethoxycarbonyl als Substituenten in Betracht.

Für den Fall, daß der Rest $B^2$ für substituiertes $C_5$-$C_7$-Cycloalkyl steht, kommen $C_1$-$C_4$-Alkyl, $C_1$-$C_4$-Alkoxy, $C_2$-$C_4$-Hydroxyalkyl oder Hydroxy als Substituenten in Betracht.

Für den Fall, daß der Rest $B^2$ für Acyl steht, ist unter Acyl jeweils gegebenenfalls substituiertes Benzoyl oder Phenylsulfonyl, gegebenenfalls durch Phenyl substitiertes $C_1$-$C_{10}$-Alkanoyl, oder $C_1$-$C_6$-Alkylsulfonyl zu verstehen.

Einzelne Reste $B^2$ sind beispielsweise:

$CH_3$, $C_2H_5$, $C_3H_7$, $CH(CH_3)_2$, $C_4H_9$, $CH_2CH(CH_3)_2$, $\underset{CH_3}{CH}-C_2H_5$, $C_5H_{11}$,

$CH(C_2H_5)_2$, $\overset{CH_3}{CH}-C_3H_7$, $\underset{CH_3}{CH}-\underset{CH_3}{CH}-CH_3$, $C_2H_4-CH(CH_3)_2$, $CH_2-\overset{CH_3}{\underset{CH_3}{C}}-CH_3$,

$C_6H_{13}$, $C_7H_{15}$, $\underset{C_2H_5}{CH}-C_4H_9$, $CH\genfrac{}{}{0pt}{}{/CH(CH_3)_2}{\backslash CH(CH_3)_2}$, $\underset{CH_3}{CH}-C_2H_4-CH(CH_3)_2$, $C_8H_{17}$,

$CH_2-\underset{C_2H_5}{CH}-C_4H_9$ , $\underset{CH_3}{CH}-C_3H_6-CH(CH_3)_2$, $C_2H_4OH$, $C_3H_6OH$, $CH_2-\underset{CH_3}{CH}-OH$, $\underset{CH_3}{CH}-CH_2-OH$,

$C_4H_8OH$, $\overset{CH_3}{CH}-C_2H_4-OH$, $\overset{CH_3}{CH}-CH_2-OH$, $C_6H_{12}OH$, $\underset{CH_3}{CH}-C_3H_6\underset{OH}{C}(CH_3)_2$, $C_2H_4OCH_3$,

$C_2H_4OC_2H_5$, $C_2H_4OC_3H_7$, $C_2H_4OC_4H_9$, $C_2H_4OC_6H_5$, $C_2H_4OC_6H_{11}$, $C_2H_4CN$,

$C_5H_{10}CN$, $C_6H_{12}CN$, $C_2H_4OC_2H_4CN$, $C_3H_6OC_2H_4CN$, $C_3H_6OCH_3$, $C_3H_6OC_2H_5$,

$C_3H_6OC_3H_7$, $C_3H_6OC_4H_9$, $C_3H_6OCH_2-\overset{C_2H_5}{CH}-C_4H_9$, $C_3H_6OC_6H_{11}$, $C_3H_6OC_8H_{17}$,

$C_3H_6OCH_2C_6H_5$, $C_3H_6OC_2H_4C_6H_5$, $C_3H_6OC_2H_4OC_6H_5$, $C_3H_6OC_6H_5$, $C_3H_6OC_2H_4OH$,

$C_3H_6OC_4H_8OH$, $C_3H_6OC_2H_4OCH_3$, $C_3H_6OC_2H_4OC_2H_5$, $C_3H_6OC_2H_4OCH(CH_3)_2$,

$C_3H_6OC_2H_4OC_4H_9$, $C_3H_6OC_2H_4OCH_2C_6H_5$, $C_3H_6OC_2H_4OC_6H_5$, $C_3H_6OC_4H_8OCH_3$,

$C_3H_6OC_4H_8OC_2H_5$, $C_3H_6OC_4H_8OC_4H_9$, $\underset{CH_3}{CH}-CH_2OCH_3$, $\underset{CH_3}{CH}CH_2OC_4H_9$, $\underset{CH_3}{CH}-CH_2OC_6H_5$,

$\underset{CH_3}{CH}CH_2OCH_2C_6H_5$, $\underset{CH_3}{CH}-C_2H_4OCH_3$, $\underset{C_2H_5}{CH}-CH_2-OCH_3$, $\underset{CH_3}{CH}-CH(OCH_3)_2$, $CH_2\underset{CH_3}{CH}OCH_3$,

$CH_2-\underset{CH_3}{CH}-OC_2H_5$, $CH_2-\underset{CH_3}{CH}-OC_4H_9$ , $CH_2-\underset{CH_3}{CH}-OC_6H_5$ ,

$C_3H_6O\underset{CH_3}{CH}-CH_2OCH_3$, $C_3H_6O\underset{CH_3}{CH}OC_2H_5$, $CH_3H_6OCH_2\underset{CH_3}{CH}OCH_3$,

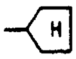 , 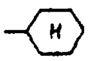 , 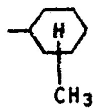 , 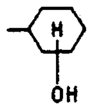 , 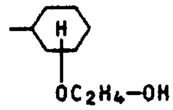 , $CH_2-C_6H_5$, $C_2H_4-C_6H_5$,

$CH_2\overset{CH_3}{CH}-C_6H_5$, $\overset{CH_3}{CH}C_2H_4-C_6H_5$, $C_2H_4\overset{CH_3}{CH}-C_6H_5$, $CH_2\underset{OH}{CH}-C_6H_5$, $\overset{C_2H_5}{CH}-C_6H_5$ , $\overset{C_3H_7}{CH}-C_6H_5$

$CH_2-C_6H_4-CH_3$, $CH_2-C_6H_4-OCH_3$, $C_2H_4-C_6H_4-CH_3$, $C_2H_4-C_6H_4-OCH_3$,

$C_6H_5$, $C_6H_4CH_3$, $C_6H_3(CH_3)_2$, $C_6H_4OCH_3$, $C_6H_3(OCH_3)_2$, $C_6H_4Cl$, $C_6H_2(OCH_3)_2Cl$,

$CH_2CH{=}CH_2$, $CH_2COOCH_3$, $(CH_2)_5COOCH_3$, $(CH_2)_5COOC_2H_5$, $(CH_2)_5COOC_4H_9$,

$(CH_2)_5COOCH_2\overset{C_2H_5}{\underset{C_4H_9}{CH}}$ , $(CH_2)_2OCHO$, $(CH_2)_2OCO(CH_2)_nCH_3$, $(C_2H_4O)_2CHO$,

$(C_2H_4O)_2CO(CH_2)_nCH_3$, $(CH_2)_3O(CH_2)_2OCHO$, $(CH_2)_3O(CH_2)_2OCO(CH_2)_nCH_3$,

$(CH_2)_2O(CH_2)_4OCHO$, $(CH_2)_2O(CH_2)_4OCO(CH_2)_nCH_3$ (wobei n die Zahl 0 bis 7 bedeuteten kann), $(CH_2)_2OCOCH\begin{smallmatrix}C_2H_5\\C_4H_9\end{smallmatrix}$, $(CH_2)_2OCOC_6H_5$, $(CH_2)_2OCOC_6H_4CH_3$,

$(CH_2)_2OCOC_6H_4Cl$, $(CH_2)_2OCONHCH_3$, $(CH_2)_2OCONHC_4H_9$, $(CH_2)_2OCONHCH_2CH\begin{smallmatrix}C_2H_5\\C_4H_9\end{smallmatrix}$,

$(CH_2)_2OCONHC_6H_5$, $CHO$, $CH_3CO$, $C_2H_5CO$, $C_3H_7CO$, $C_4H_9CO$, $C_5H_{11}CO$, $C_6H_{13}CO$,

$C_7H_{15}CO$, $C_8H_{17}CO$, $C_9H_{19}CO$, $C_{10}H_{21}CO$, $C_6H_5CO$, $CH_3C_6H_4CO$, $C_6H_5CH_2CO$, $CH_3SO_2$,

$C_2H_5SO_2$, $C_6H_5SO_2$ oder $CH_3C_6H_4SO_2$.

Einzelne Reste $T^1$ sind beispielsweise Wasserstoff, Methyl, Ethyl, Propyl, Butyl, Benzyl, Phenethyl, Phenyl, o-, m-, p-Tolyl oder o-, p-Chlorphenyl.

Für den Fall, daß der Rest $T^3$ für substituiertes $C_1$-$C_6$-Alkyl steht kommen Chlor, Brom, Hydroxy, $C_1$-$C_8$-Alkoxy, Phenoxy, Cyano, Carboxy, Phenyl, $C_1$-$C_8$-Alkanoyloxy, $C_1$-$C_8$-Alkoxy-$C_1$-$C_4$-alkoxy, Benzoyloxy, o-, m-, p-Methylbenzoyloxy, o-, m-, p-Chlorbenzoyloxy, $C_1$-$C_8$-Alkoxy-$C_1$-$C_8$-alkanoyloxy, Phenoxy-$C_1$-$C_8$-alkanoyloxy, $C_1$-$C_8$-Alkoxycarbonyloxy, $C_1$-$C_8$-Alkoxy-$C_1$-$C_8$-alkoxycarbonyloxy, Benzyloxycarbonyloxy,

Phenethyloxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_8$-Alkoxycarbonyl, $C_1$-$C_8$-Alkoxy-$C_1$-$C_8$-alkoxycarbonyl, Phenoxycarbonyl, Benzyloxycarbonyl, Phenoxy-$C_1$-$C_4$-alkoxy oder Phenethyloxycarbonyl als Substituenten in Betracht.

Einzelne Reste $T^3$ sind z.B. Methyl, Ethyl, Propyl, Butyl, Pentyl, Hexyl, Allyl, Methallyl, 2-Chlorethyl, 2-Bromethyl, 2-Cyanoethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butuxoycarbonylethyl, 2-Phenoxycarbonylethyl, 2-Benzyloxycarbonylethyl, 2-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonyloxyethyl, 2-Benzoyloxyethyl, Cyclopentyl, Cyclohexyl, Cycloheptyl, Benzyl, Phenylethyl oder Phenyl.

Als Reste $T^4$ und $T^5$ kommen beispielsweise Wasserstoff, Methyl, Ethyl, Propyl, Brom, Chlor, Methoxy, Ethoxy, Phenoxy, Benzyloxy, Methylsulfonylamino, Ethylsulfonylamino, Isopropylsulfonylamino, Butylsulfonylamino, Dimethylaminosulfonylamino, Diethylaminosulfonylamino, Methoxycarbonylamino, Ethoxycarbonylamino, Propoxycarbonylamino, Isobutoxycarbonylamino, Formylamino, Acetylamino, Propionylamino, Butyrylamino, Pentanoylamino, Hexanoylamino, Benzoylamino, 4-Methylbenzoylamino, 4-Chlorbenzoylamino oder 2-Methoxybenzoylamino in Betracht.

Reste $T^6$ sind neben den bereits genannten z.B. Carbamoyl, Methylcarbamoyl, Dimethylcarbamoyl, Ethylcarbamoyl, Deithylcarbamoyl, Methoxycarbonyl, Ethoxycarbonyl, n- oder i-Propoxycarbonyl, n- , i- oder sec-Butoxycarbonyl, Methoxyethoxycarbonyl, Ethoxyethoxycarbonyl, n- oder i-Propoxyethoxycarbonyl oder n- , i- oder sec-Butoxyethoxycarbonyl.

Reste $T^7$ sind beispielsweise Methyl, Ethyl, Propyl, Isopropyl, Butyl, Isobutyl, sec-Butyl, tert-Butyl, Pentyl, Hexyl, Heptyl, Octyl, 2-Ethylhexyl, Nonyl, Decyl, Cyanomethyl, Methoxycarbonylmethyl, Ethoxycarbonylmethyl, Benzyl, Phenylethyl, Phenyl, Chlor, Brom, Nitro, Methoxy, Ethoxy, Propoxy, Isopropoxy, Butoxy, Isobutoxy, Pentyloxy, Hexyloxy, Heptyloxy, 2-Ethylhexyloxy, Nonyloxy, Decyloxy, 2-Methoxyethoxy, 2-Ethoxyethoxy, 2-Propoxyethoxy, 2-Butoxyethoxy, Phenoxy, Benzyloxy, Methylthio, Ethylthio, Propylthio, Butylthio, Isobutylthio, sec-Butylthio, Phenylthio, Methylamino, Dimethylamino, Ethylamino, Diethylamino, Propylamino, Dipropylamino, Isopropylamino, Diisopropylamino, Butylamino, Dibutylamino, Methyl-ethylamino, Formylamino, Acetylamino, Propionylamino, Butyrylamino, Pentanoylamino, Methoxycarbonyl, Ethoxycarbonyl, Propoxycarbonyl, Isopropoxycarbonyl, Butoxycarbonyl, Isobutoxycarbonyl, sec-Butoxycarbonyl oder tert-Butoxycarbonyl.

Besonders bevorzugt sind thiophenhaltige Azofarbstoffe der Formel I, in der R $C_1$-$C_8$-Alkyl oder $C_3$-$C_5$-Alkenyl, X Wasserstoff, Chlor, Brom, $C_1$-$C_4$-Alkoxy, Phenylthio, Phenylsulfonyl, $C_1$-$C_4$-Alkyl oder Phenyl, Y Cyano oder den Rest CO-Z, in dem Z für $C_1$-$C_4$-Alkoxy steht, und K den Rest einer Kupplungskomponente der Anilin-, Pyridin-, Thiophen-, Thiazol- oder Aminopyrazolreihe bedeuten. Die Kupplungskomponenten entsprechen dabei der Formel II, III, VI, VII, VIII oder IX.

Die neuen Farbstoffe der Formel I eignen sich zum Färben von Fasermaterial, insbesondere von Polyestern, Polyamiden, Celluloseestern oder Mischgeweben aus Polyestern und Cellulosefasern. Sie ergeben dabei Färbungen in gelben bis türkisfarbenen Tönen, die in der Regel gute bis sehr gute Echtheiten, insbesondere auf Polyestern, aufweisen.

Bei geeigneter Konstitution sind die Farbstoffe unter reduzierenden und/ oder unter alkalischen und reduzierenden Bedingungen nach an sich bekannten Methoden, wie sie in der GB-A-1 543 724 und GB-A-2 071 707 beschrieben sind, ätzbar.

Zur Herstellung der Verbindungen der Formel I kann man eine Diazoniumverbindung von Aminen der Formel XI

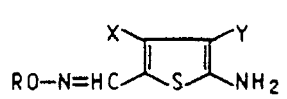 (XI),

in der R, X und Y jeweils die obengenannte Bedeutung besitzen, nach üblichen Methoden mit einer Kupplungskomponente der Formel HK umsetzen.

Amine der Formel XI erhält man durch Umsetzung von Verbindungen der Formel XII

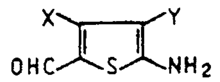 (XII),

in der X und Y jeweils die obengenannte Bedeutung besitzen, mit den entsprechenden Hydroxylaminethern nach an sich bekannten Methoden. Die Herstellung von Hydroxylaminethern ist bekannt und beispielsweise in Houben-Weyl "Methoden der organischen Chemie", Band 10/1, Seite 1181 f., (1971), beschrieben.

Weitere Einzelheiten der Herstellung können den Beispielen entnommen werden, die die Erfindung näher erläutern sollen. In den Beispielen beziehen sich Angaben über Prozente, sofern nicht anders vermerkt, auf das Gewicht.

Beispiel 1

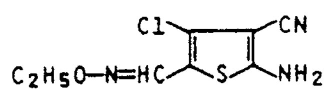

37,3 g 2-Amino-4-chlor-3-cyano-5-formylthiophen wurden zusammen mit 250 ml Eisessig, 26,8 g 50 %igem, wässrigem O-Ethylhydroxylamin und 10 Tropfen 85 %iger Schwefelsäure 1,5 Stunden unter Rückfluß erhitzt. Nach dem Abkühlen wurde der hellbraune Feststoff abgesaugt, mit 50 ml Eisessig und 1000 ml Wasser gewaschen und bei 60° C unter vermindertem Druck getrocknet. Man erhielt 37,6 g (82 % d.Th. ) 2-Amino-4-chlor-3-cyano-5-(O-ethylaldoximino)thiophen in Form hellbrauner Kristalle. Eine aus Ethanol umkristallisierte Probe zeigt einen Schmelzpunkt von 221-223° C und folgende Analysenwerte: $C_8H_8ClN_3OS$ (229,5)

| | | | | | | | |
|---|---|---|---|---|---|---|---|
| ber.: | C 41,83 | H 3,49 | Cl 15,47 | N 18,30 | O 6,97 | S 13,94 | % |
| gef.: | C 41,7 | H 3,4 | Cl 15,9 | N 17,9 | O 7,3 | S 13,8 | % |

IR- und $^1$H-NMR-Spektrum stehen mit der Konstitution in Einklang.

Die in Tabelle 1 aufgeführten 2-Amino-5-aldoximinothiophene der Formel

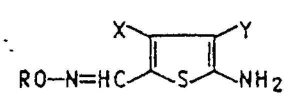

werden in analoger Weise erhalten.

Tabelle 1

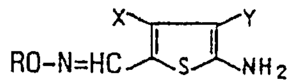

| Bsp.Nr. | R | X | Y |
|---|---|---|---|
| 2 | $CH_3$ | Cl | CN |
| 3 | $C_4H_9$ | Cl | CN |
| 4 | $CH_2C_6H_5$ | Cl | CN |
| 5 | $C_2H_5$ | $SC_6H_5$ | CN |
| 6 | $C_2H_5$ | $SO_2C_6H_5$ | CN |
| 7 | $C_4H_9$ | $OC_2H_5$ | CN |
| 8 | i-$C_3H_7$ | Br | CN |
| 9 | $CH_2CH{=}CH_2$ | Cl | CN |
| 10 | $C_2H_5$ | Cl | $CO_2C_2H_5$ |
| 11 | $C_3H_7$ | H | CN |
| 12 | $CH_2C_6H_5$ | $CH_3$ | CN |
| 13 | $CH_3$ | $C_6H_5$ | CN |

Beispiel 14

5,7 g 2-Amino-4-chlor-3-cyano-5-(O-ethylaldoximino)thiophen (siehe Beispiel 1) wurden in 40 ml Eisessig/Propionsäure 3:1 angerührt und bei 0 bis 5 °C langsam mit 8,3 g 40 %iger Nitrosylschwefelsäure versetzt. Nach zweistündigem Rühren bei 0 bis 5 °C wurde diese Diazoniumsalzlösung zu 5,9 g 3-(N,N-Diethylamino)-1-acetanilid in 100 ml Wasser, 20 ml Salzsäure, 0,5 g Amidosulfonsäure und 125 g Eis getropft. Man rührte die Farbstoffsuspension 4 Stunden bei 0 bis 5 °C und saugte dann den Farbstoff der Formel

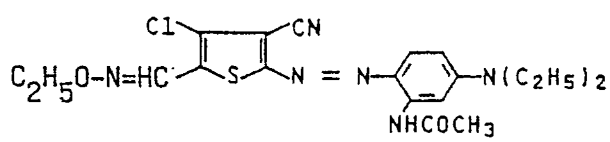

ab, wusch mit Wasser neutral und trocknete. Ausbeute: 9,6 g. Der Farbstoff färbt Polyesterfasermaterial in blauen Tönen mit guten Echtheiten.
λ max ($CH_2Cl_2$): 580 nm.

Beispiel 15

Man arbeitete analog Beispiel 14, ersetzte jedoch die Kupplungskomponente 3-(N,N-Diethylamino)-1-acetanilid durch 3-(N,N-Diethylamino)-1-methoxy-acetanilid. Man erhielt so 9,8 g des Farbstoffs der Formel

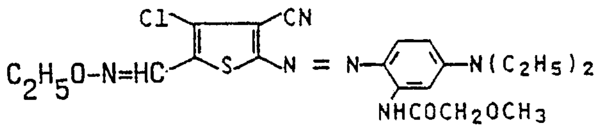

der Polyesterfasermaterial in echten, blauen Tönen färbt.
λ max ($CH_2Cl_2$): 588 nm.

Die in Tabelle 2 aufgeführten Farbstoffe der Formel

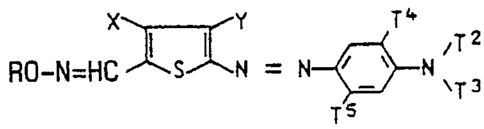

werden in analoger Weise erhalten.

Tabelle 2

| Bsp. Nr. | R | X | Y | $T^5$ | $T^4$ | $T^3$ | $T^2$ | Nuance auf PES |
|---|---|---|---|---|---|---|---|---|
| 16 | $C_2H_5$ | Cl | CN | $CH_3$ | H | $C_2H_5$ | $C_2H_5$ | rotst. blau |
| 17 | $C_2H_5$ | Cl | CN | $CH_3$ | H | $C_4H_9$ | $C_4H_9$ | rotst. blau |
| 18 | $C_2H_5$ | Cl | CN | $NHCOCH_2Cl$ | H | $C_2H_5$ | $C_2H_5$ | blau |
| 19 | $C_2H_5$ | Cl | CN | $NHCOC_2H_5$ | H | $C_2H_5$ | $C_2H_5$ | blau |
| 20 | $C_2H_5$ | Cl | CN | $NHCOCH_3$ | H | $C_4H_9$ | $C_4H_9$ | blau |
| 21 | $C_2H_5$ | Cl | CN | $NHCOCH_3$ | $OCH_3$ | $C_2H_5$ | $C_2H_5$ | grünst blau |
| 22 | $C_2H_5$ | Cl | CN | $NHCOCH_3$ | $OC_2H_5$ | $C_2H_5$ | $C_2H_5$ | grünst blau |
| 23 | $C_2H_5$ | Cl | CN | $NHCOCH_3$ | $OCH_3$ | $C_2H_4OCOCH_3$ | $C_2H_4OCOCH_3$ | grünst blau |
| 24 | $C_2H_5$ | Cl | CN | $NHCOCH_3$ | $OCH_3$ | $C_2H_4CN$ | $CH_2CH=CH_2$ | grünst blau |
| 25 | $C_2H_5$ | Cl | CN | $NHCOCH_3$ | H | $C_2H_4OCH_3$ | $C_2H_5$ | blau |
| 26 | $C_2H_5$ | Cl | CN | $NHCOCH_3$ | H | $C_2H_4OCH_3$ | $C_2H_4OCH_3$ | blau |
| 27 | $C_2H_5$ | Cl | CN | $NHCOCH_3$ | H | $C_4H_8OCOCH_3$ | $C_4H_8OCOCH_3$ | blau |
| 28 | $C_2H_5$ | Cl | CN | $NHCOCH_3$ | H | $CH_2CH=CH_2$ | $CH_2CH=CH_2$ | blau |
| 29 | $C_2H_5$ | Cl | CN | $NHCOCH_2CN$ | H | $C_2H_5$ | $C_2H_5$ | blau |
| 30 | $C_2H_5$ | Cl | CN | $NHCOCH_2C_6H_5$ | H | $n-C_3H_7$ | $n-C_3H_7$ | blau |
| 31 | $C_2H_5$ | Cl | CN | $CH_3$ | H | $C_2H_5$ | $C_2H_4OH$ | rotst. blau |

Tabelle 2 (Forts.)

| Bsp. Nr. | R | X | Y | $T^5$ | $T^4$ | $T^3$ | $T^2$ | Nuance auf PES |
|---|---|---|---|---|---|---|---|---|
| 32 | $C_2H_5$ | Cl | CN | $CH_3$ | H | $C_2H_4OH$ | $C_2H_4OH$ | blau-viol. |
| 33 | $C_2H_5$ | Cl | CN | $NHCOCH_3$ | H | $C_2H_4OCOCH_3$ | $C_2H_4OCOCH_3$ | rotst. blau |
| 34 | $C_2H_5$ | Cl | CN | $CH_3$ | $OCH_3$ | $C_2H_4OCOCH_3$ | $C_2H_4OCOCH_3$ | blau |
| 35 | $C_2H_5$ | Cl | CN | H | H | $C_2H_5$ | $C_6H_5$ | blau-viol. |
| 36 | $C_2H_5$ | Cl | CN | $NHSO_2CH_3$ | H | $C_2H_5$ | $C_2H_5$ | blau |
| 37 | $C_2H_5$ | Cl | CN | $NHCOC_2H_5$ | H | $C_2H_4OH$ | $C_2H_4OH$ | blau |
| 38 | $C_2H_5$ | Cl | CN | H | $OCH_3$ | $C_2H_5$ | $C_2H_5$ | blau |
| 39 | $C_2H_5$ | Cl | CN | $CH_3$ | H | $C_2H_5$ | $C_2H_4CN$ | blau-viol. |
| 40 | $C_2H_5$ | Cl | CN | $NHCOOC_2H_5$ | H | $C_2H_5$ | $C_2H_4OH$ | rotst. blau |
| 41 | $C_2H_5$ | Cl | CN | H | $OCH_3$ | $C_2H_4OCOCH_3$ | $C_2H_4OCOCH_3$ | rotst. blau |
| 42 | $C_2H_5$ | Cl | CN | $NHCOCH(CH_3)_2$ | H | $C_2H_5$ | $C_2H_5$ | blau |
| 43 | $C_2H_5$ | Cl | CN | $NHCOCH_3$ | H | $C_2H_4CN$ | $C_2H_5$ | rotst. blau |
| 44 | $C_2H_5$ | Cl | $CO_2C_2H_5$ | $NHCOCH_3$ | H | $C_2H_5$ | $C_2H_5$ | rotst. blau |
| 45 | $C_2H_5$ | Cl | $CO_2C_2H_5$ | $NHCOC_2H_5$ | $CH_3$ | $n-C_3H_7$ | $n-C_3H_7$ | rotst. blau |
| 46 | $C_2H_5$ | Cl | $CO_2C_2H_5$ | $NHCOCH_2OCH_3$ | H | $C_2H_4OCH_3$ | $C_2H_4OCH_3$ | rotst. blau |
| 47 | $C_2H_5$ | Cl | $CO_2C_2H_5$ | $NHCOCH_3$ | $OCH_3$ | $C_2H_4OCOCH_3$ | $C_2H_4OCOCH_3$ | blau |
| 48 | $C_2H_5$ | Cl | $CO_2C_2H_5$ | $CH_3$ | H | $C_2H_4CN$ | $C_2H_5$ | vio-lett |
| 49 | $C_2H_5$ | Cl | $CO_2C_2H_5$ | H | H | $C_2H_4CN$ | $C_2H_4OCOCH_3$ | vio-lett |
| 50 | $C_2H_5$ | Cl | $CO_2CH_3$ | $NHCOCH_3$ | H | $C_2H_5$ | $C_2H_5$ | blau |
| 51 | $C_4H_9$ | Cl | CN | $NHCOCH_3$ | H | $n-C_4H_9$ | $n-C_4H_9$ | blau |
| 52 | $C_4H_9$ | Cl | CN | $NHCOCH_3$ | H | $C_2H_4OH$ | $C_2H_4OH$ | rotst. blau |
| 53 | $C_4H_9$ | Cl | CN | $NHCOCH_2OC_6H_5$ | H | $C_2H_5$ | $C_2H_5$ | blau |
| 54 | $C_4H_9$ | Cl | CN | $CH_3$ | H | $C_2H_5$ | $C_2H_5$ | blau-vio-lett |
| 55 | $C_4H_9$ | Cl | CN | H | H | $C_2H_5$ | $C_2H_5$ | vio-lett |
| 56 | $C_4H_9$ | Cl | CN | $NHCOCH_3$ | H | $C_2H_5$ | $C_2H_5$ | blau |

Tabelle 2 (Forts.)

| Bsp. Nr. | R | X | Y | $T^5$ | $T^4$ | $T^3$ | $T^2$ | Nuance auf PES |
|---|---|---|---|---|---|---|---|---|
| 57 | $C_4H_9$ | Cl | CN | $NHCOCH_3$ | $OCH_3$ | $C_2H_4OCOCH_3$ | $C_2H_4OCOCH_3$ | grünst blau |
| 58 | $C_3H_7$ | Br | CN | $NHCOCH_3$ | H | n-$C_3H_7$ | n-$C_3H_7$ | blau |
| 59 | $C_3H_7$ | Br | CN | $CH_3$ | H | $C_2H_5$ | $C_2H_4CN$ | violett |
| 60 | $C_4H_9$ | Cl | CN | $CH_3$ | $OCH_3$ | $C_2H_4OCOCH_3$ | $C_2H_4OCOCH_3$ | blau |
| 61 | $CH_3$ | 1) | CN | $CH_3$ | H | $C_2H_5$ | $C_2H_4OH$ | rotst. blau |
| 62 | $CH_2C_6H_5$ | 2) | CN | $NHCOCH_3$ | H | $C_2H_5$ | $C_2H_5$ | rotst. blau |
| 63 | $CH_2C_6H_5$ | 2) | CN | $CH_3$ | H | $C_2H_4OH$ | $C_2H_4OH$ | blau-violett |
| 64 | $CH_2C_6H_5$ | 2) | CN | $CH_3$ | H | $C_2H_5$ | $C_2H_4CN$ | violett |
| 65 | $C_2H_5$ | 3) | CN | $NHCOCH_3$ | H | $C_4H_9$ | $C_4H_9$ | blau |
| 66 | $C_2H_5$ | 3) | CN | $NHCOC_2H_5$ | H | $C_2H_4OCOCH_3$ | $C_2H_4OCOCH_3$ | rotst. blau |
| 67 | $C_2H_5$ | 3) | CN | $NHCOCH_2OCH_3$ | H | $C_2H_5$ | $C_2H_5$ | blau |
| 68 | $C_2H_5$ | 3) | CN | H | H | $C_2H_4CN$ | $C_2H_5$ | violett |
| 69 | $C_2H_5$ | 4) | CN | $CH_3$ | H | $C_2H_4CN$ | $C_2H_5$ | violett |
| 70 | $C_2H_5$ | 4) | CN | $NHCOCH_3$ | $OCH_3$ | $C_2H_5$ | $C_2H_5$ | grünst blau |
| 71 | $C_2H_5$ | 4) | CN | $NHCOCH_3$ | H | $C_2H_5$ | $C_2H_5$ | blau |
| 72 | $C_2H_5$ | 4) | CN | $NHCOC_2H_5$ | H | $C_2H_4OH$ | $C_2H_4OH$ | blau |
| 73 | $C_2H_5$ | 4) | CN | $NHCOCH_3$ | H | $C_2H_4CN$ | $C_2H_5$ | rotst. blau |
| 74 | $C_4H_9$ | 5) | CN | $NHCOCH_3$ | H | $C_3H_7$ | $C_3H_7$ | blau |
| 75 | $C_4H_9$ | 5) | CN | $NHCOCH_3$ | $OC_2H_5$ | $C_2H_4CN$ | $CH_2CH{=}CH_2$ | grünst blau |
| 76 | $C_4H_9$ | 5) | CN | $NHCOCH_3$ | H | $CH_2CH{=}CH_2$ | $CH_2CH{=}CH_2$ | rotst. blau |
| 77 | $C_4H_9$ | 5) | CN | $NHCOCH_2OCH_3$ | H | $C_2H_4OCOCH_3$ | $C_2H_4OCOCH_3$ | rotst. blau |
| 78 | $C_4H_9$ | 5) | CN | $NHCOCH_2Cl$ | H | $C_4H_9$ | $C_4H_9$ | blau |
| 79 | $C_4H_9$ | 5) | CN | $CH_3$ | H | $C_2H_4OH$ | $C_2H_5$ | blau-viol. |
| 80 | 6) | Cl | CN | $NHCOCH_3$ | H | $C_4H_9$ | $C_4H_9$ | blau |

1) = $C_6H_5$
2) = $CH_3$
3) = $SC_6H_5$
4) = $SO_2C_6H_5$
5) = $OC_2H_5$
6) = $CH_2CH{=}CH_2$

Analog Beispiel 15 werden auch die in Tabelle 3 aufgeführten Farbstoffe der Formel

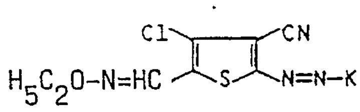

erhalten.

Tabelle 3

| Bsp.-Nr. | K | Nuance auf PES |
|---|---|---|
| 81 | 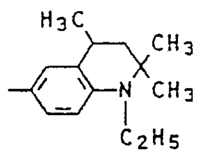 | blau |
| 82 | 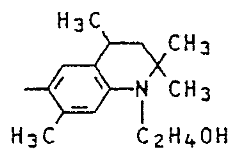 | blau |
| 83 | 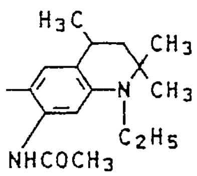 | blau |
| 84 | 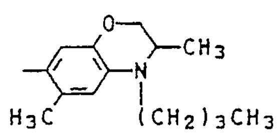 | blau |
| 85 | 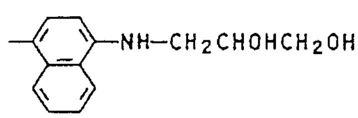 | blau |
| 86 | 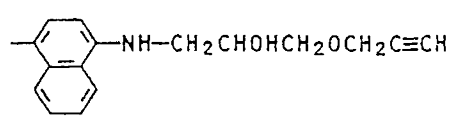 | blau |

Tabelle 3 (Forts.)

| Bsp.-Nr. | K | Nuance auf PES |
|---|---|---|
| 87 | 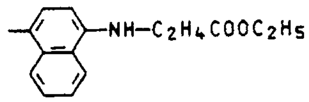 | blau |
| 88 | 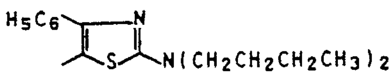 | blau |
| 89 | 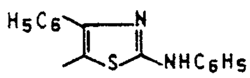 | blau |
| 90 | 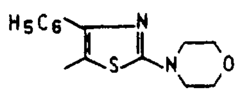 | blau |
| 91 | 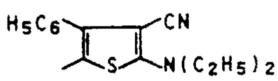 | blau |
| 92 | 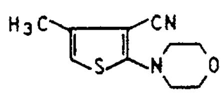 | blau |
| 93 | 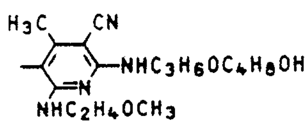 | rotviolett |
| 94 | 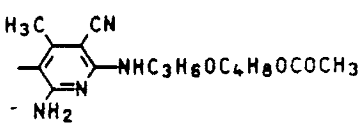 | rotviolett |
| 95 | 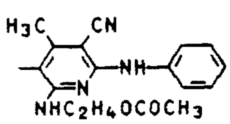 | violett |
| 96 | 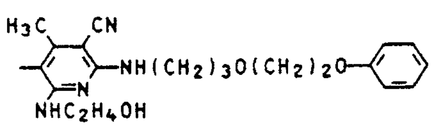 | rotviolett |

## Ansprüche

1. Thiophengruppenhaltige Azofarbstoffe der Formel I

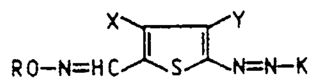

(I),

in der

R jeweils gegebenenfalls substituiertes $C_1$-$C_{12}$-Alkyl, $C_3$-$C_6$-Alkenyl, $C_5$-$C_7$-Cycloalkyl oder Phenyl,

X Wasserstoff, Halogen, Hydroxy, gegebenenfalls durch Phenyl substituiertes $C_1$-$C_8$-Alkoxy, $C_5$-$C_7$-Cycloalkoxy, gegebenenfalls substituiertes Phenoxy, Mercapto, gegebenenfalls durch Hydroxy, $C_1$-$C_4$-Alkoxycarbonyl oder Phenyl substituiertes $C_1$-$C_8$-Alkylthio, $C_5$-$C_7$-Cycloalkylthio, gegebenenfalls substituiertes Phenylthio, $C_1$-$C_4$-Alkylsulfonyl, gegebenenfalls substituiertes Phenylsulfonyl, $C_1$-$C_8$-Alkyl oder gegebenenfalls substituiertes Phenyl

Y Cyano, Nitro, $C_1$-$C_{10}$-Alkanoyl, gegebenenfalls substituiertes Benzoyl, $C_1$-$C_4$-Alkylsulfonyl, gegebenenfalls substituiertes Phenylsulfonyl oder den Rest CO-Z, in dem Z für Hydroxy, gegebenenfalls durch Hydroxy oder $C_1$-$C_4$-Alkoxy substituiertes $C_1$-$C_8$-Alkoxy, gegebenenfalls substituiertes Phenoxy, Amino, $C_1$-$C_8$-Mono- oder Dialkylamino, Pyrrolidino, Piperidino, Morpholino oder N-($C_1$-$C_4$-Alkyl)piperazino steht und

K den Rest einer Kupplungskomponente bedeuten.

2. Thiophengruppenhaltige Azofarbstoffe gemäß Anspruch 1, dadurch gekennzeichnet, daß R $C_1$-$C_8$-Alkyl oder $C_3$-$C_5$-Alkenyl, X Wasserstoff, Chlor, Brom, $C_1$-$C_4$-Alkoxy, Phenylthio, Phenylsulfonyl, $C_1$-$C_4$-Alkyl oder Phenyl, Y Cyano oder den Rest CO-Z, in dem Z für $C_1$-$C_4$-Alkoxy steht, und K den Rest einer Kupplungskomponente der Anilin-, Pyridin-, Thiophen-, Thiazol- oder Aminopyrazolreihe bedeuten.

3. Verwendung der thiophengruppenhaltigen Azofarbstoffe gemäß Anspruch 1 zum Färben von Fasermaterial.

## Claims

1. A thiophene-containing azo dye of the formula I

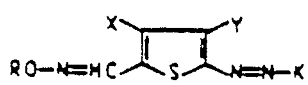

(I)

where R is substituted or unsubstituted $C_1$-$C_{12}$-alkyl, substituted or unsubstituted $C_3$-$C_6$-alkenyl, substituted or unsubstituted $C_5$-$C_7$-cycloalkyl or substituted or unsubstituted phenyl, X is hydrogen, halogen, hydroxyl, unsubstituted or phenyl-substituted $C_1$-$C_8$-alkoxy, $C_5$-$C_7$-cycloalkoxy, substituted or unsubstituted phenoxy, mercapto, unsubstituted or hydroxyl-, $C_1$-$C_4$-alkoxycarbonyl-or phenyl-substituted $C_1$-$C_8$-alkylthio, $C_5$-$C_7$-cyclo-alkylthio, substituted or unsubstituted phenylthio, $C_1$-$C_4$-alkylsulfonyl, substituted or unsubstituted phenylsulfonyl, $C_1$-$C_8$-alkyl or substituted or unsubstituted phenyl, y is cyano, nitro, $c_1$-$c_{10}$-alkanoyl, substituted or unsubstituted benzoyl, $C_1$-$C_4$-alkylsulfonyl, substituted or unsubstituted phenylsulfonyl or CO-Z where Z is hydroxyl, unsubstituted or hydroxyl- or $C_1$-$C_4$-alkoxy-substituted $C_1$-$C_8$-alkoxy, substituted or unsubstituted phenoxy, amino, $C_1$-$C_8$-mono- or dialkylamino, pyrrolidino, piperidino, morpholino or N-($C_1$-$C_4$-alkyl)piperazino and K is the radical of a coupling component.

2. A thiophene-containing azo dye as claimed in claim 1, wherein R is $C_1$-$C_8$-alkyl or $C_3$-$C_5$-alkenyl, X is hydrogen, chlorine, bromine, $C_1$-$C_4$-alkoxy, phenylthio, phenylsulfonyl, $C_1$-$C_4$-alkyl or phenyl, Y is cyano or COZ where Z is $C_1$-$C_4$-alkoxy and K is the radical of a coupling component of the aniline, pyridine, thiophene, thiazole or aminopyrazole series.

3. Use of the thiophene-containing azo dye as claimed in claim 1 for dyeing fiber material.

## Revendications

**1.** Colorants azoïques contenant un groupement thiophène de formule I

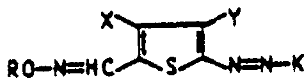

(I),

dans laquelle

R représente un reste alkyle en $C_1$-$C_{12}$, alcényle en $C_3$-$C_6$, cycloalkyle en ($C_5$-$C_7$ ou phényle éventuellement substitué,

X représente un atome d'hydrogène, d'halogène, un reste hydroxy, $C_1$-$C_8$-alcoxy éventuellement substitué par un groupement phényle, $C_5$-$c_7$-cycloalcoxy, phénoxy éventuellement substitué, mercapto, $C_1$-$C_8$-alkylthio éventuellement substitué par un groupement hydroxy, $C_1$-$C_4$-alcoxy-carbonyle ou phényle, $C_6$-$C_7$-cycloalkylthio, phénylthio éventuellement substitué, $C_1$-$C_4$-alkyl-sulfonyle, phénylsulfonyle éventuellement substitué, $C_1$-$C_8$-alkyle ou phényle éventuellement substitué,

Y représente un reste cyano, nitro, $C_1$-$C_{10}$-alcanoyle, benzoyle éventuellement substitué, $C_1$-$C_4$-alkylsulfonyle, phénylsulfonyle éventuellement substitué ou le reste CO-Z où Z est mis pour un radical hydroxy, $C_1$-$C_8$-alcoxy éventuellement substitué par un groupement hydroxy ou $C_1$-$C_4$-alcoxy, phénoxy éventuellement substitué, amino, $C_1$-$C_8$-mono- ou dialkylamino, pyrrolidino, pipéridino, morpholino ou N-($C_1$-$C_4$-alkyl)pipérazino, et

K représente le reste d'un composant de copulation.

**2.** Colorants azoïques contenant un groupement thiophène selon la revendication 1, caractérisés en ce que R représente un reste $C_1$-$C_8$-alkyle ou $C_3$-$C_6$-alcényle, X représente un atome d'hydrogène, de chlore, de brome, un reste $C_1$-$C_4$-alcoxy, phénylthio, phénylsulfonyle, $C_1$-$C_4$-alkyle ou phényle, Y représente un reste cyano ou le reste CO-Z où Z est mis pour un radical $C_1$-$C_4$-alcoxy, et K représente le reste d'un composant de copulation de la série des anilines, des pyridines, des thiophènes, des thiazoles ou des aminopyrazoles.

**3.** Utilisation des colorants azoïques contenant un groupement thiophène selon la revendication 1 pour la teinture de matières fibreuses.